# FASCICULE DE BREVET EUROPEEN

(11) **EP 1 506 099 B1**
(45) Date de publication et mention de la délivrance du brevet: **03.05.2006**
(21) Numéro de dépôt: 03740128.8
(22) Date de dépôt: 06.05.2003
(51) Int. Cl.: B60C 11/00, B60C 11/12, B60C 11/03, B29D 30/06

(54) **BANDE DE ROULEMENT EVOLUTIVE**
SKALIERBARER LAUFSTREIFEN
WEAR-ADAPTABLE RUNNING TREAD

(30) Priorité: 15.05.2002 FR 0206004
(43) Date de publication de la demande: 16.02.2005
(73) Titulaire: Société de Technologie Michelin, 63000 Clermont-Ferrand (FR); MICHELIN RECHERCHE ET TECHNIQUE S.A., 1763 Granges-Paccot (CH)
(72) Inventeur: MERINO LOPEZ, Jose, F-63200 Riom (FR)
(74) Mandataire: Diernaz, Christian
(86) Numéro de dépôt international: PCT/EP2003/004722
(87) Numéro de publication internationale: WO 2003/097384

(56) Documents cités:
- EP-A- 1 125 709
- US-B1- 6 264 453

## Description

L'invention concerne les sculptures de bande de roulement pour pneumatique et notamment pour pneumatique destinés à équiper des véhicules poids lourd.

Afin de conférer à une bande de roulement des performances optimales sur tous types de sol (sec ou mouillé), il est connu de réaliser sur cette bande une sculpture formée d'une pluralité d'éléments de sculpture délimités par des découpures (adoptant soit la forme de rainures soit celle d'incisions), ces découpures débouchant sur la surface de roulement de la bande à l'état neuf. La fonction de ces découpures est de créer des arêtes pour couper le film de liquide éventuellement présent sur la chaussée et de servir de passage pour l'écoulement du même liquide afin d'améliorer la sécurité d'un véhicule équipé de tels pneumatiques sur sol recouvert de liquide.

Toutefois, la présence de découpures profondes permettant de bénéficier des effets techniques rappelés plus haut durant toute la durée d'utilisation de la bande de roulement (correspondant en général à la limite d'usure acceptable de cette bande) conduit à une réduction sensible de la rigidité d'ensemble de la bande (rigidité à l'écrasement et rigidité en cisaillement dans une direction parallèle au contact avec le sol). Pour atténuer l'effet de cette diminution de rigidité, il a été proposé, par exemple dans la demande de brevet publiée sous le numéro WO98/54009 de réaliser sur la surface de roulement à l'état neuf des rainures de profondeur réduite c'est-à-dire n'affectant pas la totalité de l'épaisseur de la bande et, en complément, des canaux entièrement situés sous la surface de roulement. Ces canaux ne débouchent pas sur la surface de roulement à l'état neuf et sont prévus pour former de nouvelles rainures après une usure partielle suffisante de la bande de roulement. Les rainures débouchant sur la surface de roulement à l'état neuf sont prévues pour disparaître après une usure voisine ou légèrement supérieure à l'usure nécessaire pour canaux la formation de nouvelles rainures.

Les sculptures réalisées suivant cet enseignement conduisent à une amélioration sensible; toutefois, il peut sous certaines conditions se développer une usure irrégulière sur les bords (ou arêtes) des éléments de sculpture nouvellement créés par les nouvelles rainures formées au moment où les canaux arrivent sur la surface de roulement. Par usure irrégulière, on entend une usure qui se développe davantage sur certaines régions de la bande de roulement et qui ne progresse pas d'une manière homogène dans l'épaisseur de la bande ; cette usure peut nécessiter un retrait prématuré du pneumatique pourvu d'une telle bande de roulement.

Le besoin s'est fait sentir d'une amélioration des sculptures de bande de roulement pour pneumatique de véhicule poids lourd qui tout en procurant de bonnes performances sur divers types de sol permettait de conserver une rigidité importante et d'éviter l'apparition et le développement d'usure irrégulière.

Le document EP-1125709 décrit une bande de roulement comprenant des incisions de géométrie circulaire formée par moulage au moyen d'un dispositif comportant une partie mobile en rotation.

Dans ce but, la bande de roulement selon l'invention comprenant, à l'état neuf :
- une surface de roulement ;
- une pluralité de découpures délimitant des éléments de sculpture affectant en partie l'épaisseur de la bande ;
- une pluralité de cavités sous la surface de roulement à l'état neuf, ces cavités étant destinées à former de nouvelles rainures ou incisions après une usure partielle de la bande ;
- chaque cavité délimité par le mélange de caoutchouc de la bande de roulement présentant une ligne génératrice supérieure qui n'est pas en totalité contenue dans une surface parallèle à la surface de roulement (2) à l'état neuf, ladite génératrice supérieure étant définie par l'ensemble des points de chaque section limitant ladite cavité et situés au plus près de la surface de roulement à l'état neuf ; cette bande étant
caractérisée en ce que pour chaque cavité (20), la génératrice supérieure (21) suit un profil ondulé et présentant une série de creux et de bosses, l'amplitude de ces creux et bosses étant au moins de 10% de la profondeur des nouvelles rainures ou incisions créées.

Préférentiellement, l'amplitude des creux et des bosses d'une même génératrice supérieure sont au maximum égale à 50% de la profondeur des nouvelles rainures ou incisions créées.

La génératrice supérieure d'une cavité comprend les points de chaque section transversale limitant ladite cavité et situés au plus près de la surface de roulement à l'état neuf ; ces points sont les premiers à arriver sur la surface de roulement en cours d'usure de la bande.

Avec une bande selon l'invention, chaque cavité ne débouche pas dans son ensemble (c'est-à-dire sur toute sa longueur) sur la surface de roulement après usure partielle mais débouche d'une manière progressive. De cette façon, il est créé de nouvelles rainures ou incisions délimitant de nouveaux éléments de sculpture entre lesquels existent, au moins dans un premier temps, des ponts de caoutchouc ; ceci a pour effet d'adapter les rigidités de la bande et de réduire voire empêcher l'apparition d'usures localisées sur ces nouveaux éléments de sculpture (ces usures irrégulières apparaissant plutôt à partir du moment où les nouveaux éléments viennent d'être formés).

D'autre part, la formation progressive de rainure ou d'incision sur la surface de roulement est bénéfique puisqu'on a constaté une réduction du risque de formation de cassures dans le caoutchouc.

L'écart maximal de distance entre les points du contour d'une cavité les plus près de la surface de roulement à l'état neuf, c'est à dire les points apparaissant les premiers sur la surface de roulement après usure partielle, et les points de la même génératrice apparaissant les derniers au moins égal à 10% de la profondeur totale de ladite cavité est prépondérant afin d'obtenir une bonne performance
en usure. La profondeur totale d'une cavité correspond à la distance maximale entre les points du contour de cette cavité mesurée dans une direction perpendiculaire à la surface de roulement (correspondant également à la direction de l'épaisseur de la bande).

La génératrice supérieure d'une cavité a une forme sinusoïdale ou ondulée ou en zigzag, l'amplitude entre les points d'altitudes maximale et minimale étant au moins égale à 10% de la profondeur totale de ladite cavité.

Préférentiellement, la génératrice inférieure d'une cavité n'est pas contenue dans une surface virtuelle parallèle à la surface de roulement du pneumatique neuf (c'est-à-dire une surface identique à la surface de roulement et située à une distance non nulle de cette surface de roulement). Préférentiellement, la génératrice inférieure a une forme sensiblement parallèle à la géométrie de la génératrice supérieure de la cavité (c'est-à-dire ayant des ondulations similaires) de manière à conserver une section sensiblement constante sur toute la longueur de la cavité.

Avantageusement, les points de la ligne génératrice supérieure de chaque cavité les plus éloignés de la surface de roulement sont situés, dans le sens de la longueur de la cavité, dans le deuxième tiers de la longueur L de ladite cavité.

Un cas particulièrement avantageux consiste à ce qu'une cavité précédemment décrite soit formée d'une partie moulant une rainure surmontée (c'est-à-dire vers la surface de roulement) d'une partie moulant une incision, lesdites parties étant solidaires l'une de l'autre. Selon l'invention, la partie de la cavité correspondant à la formation d'une incision comprend une génératrice supérieure dont le tracé n'est pas contenu en totalité dans une surface parallèle à la surface de roulement à l'état neuf. Ainsi, avec l'usure de la bande, certains points de la cavité arrivent en surface et forment une incision se prolongeant dans l'épaisseur de la bande par une rainure après une usure partielle supplémentaire ; selon l'invention, au moins un pont de caoutchouc est formé entre les parois en vis-à-vis de l'incision. Avantageusement, la partie moulant une incision comprend des moyens pour créer des blocages mécaniques des parois en vis-à-vis de ladite incision (forme en zigzag, combinaison de protubérances et de creux par exemple) qui limitent les déplacements relatifs entre lesdites parois. Les valeurs préconisées pour les amplitudes des points de la génératrice supérieure d'une cavité peuvent s'appliquer avantageusement aussi aux points de la génératrice supérieure de l'incision prolongeant ladite cavité (par exemple, la géométrie de la partie de l'incision la plus proche de la surface de roulement de la bande est sensiblement parallèle à la géométrie de la génératrice supérieure de la cavité qu'elle prolonge).

Il a été constaté que la résistance au roulement d'un pneumatique selon l'invention était améliorée par rapport à un pneumatique pourvu de cavités ne présentant pas les caractéristiques des cavités selon l'invention ; cette diminution de la résistance au roulement est probablement liée à la limitation des déformations de la bande de roulement au moment de la formation de nouvelles rainures.

D'autres caractéristiques et avantages de l'invention ressortent de la description faite ci-après en référence aux dessins annexés qui montrent, à titre d'exemples non limitatifs, des formes de réalisation de l'objet de l'invention :
La figure 1 montre une coupe d'une bande de roulement selon l'invention .
La figure 2 montre une coupe selon la ligne II-II de la bande de roulement montrée à la figure 1 ;
La figure 3 montre la même coupe que celle de la figure 2 après usure partielle de la bande de roulement selon l'invention ;
La figure 4 montre un élément moulant destiné au moulage d'un cavité prolongé vers la surface extérieure d'une bande de roulement par une incision ;
La figure 5 montre une coupe selon la ligne V-V de l'élément moulant représenté à la figure 4 ;
La figure 6 montre une coupe selon la ligne VI-VI de l'élément moulant représenté à la figure 4.

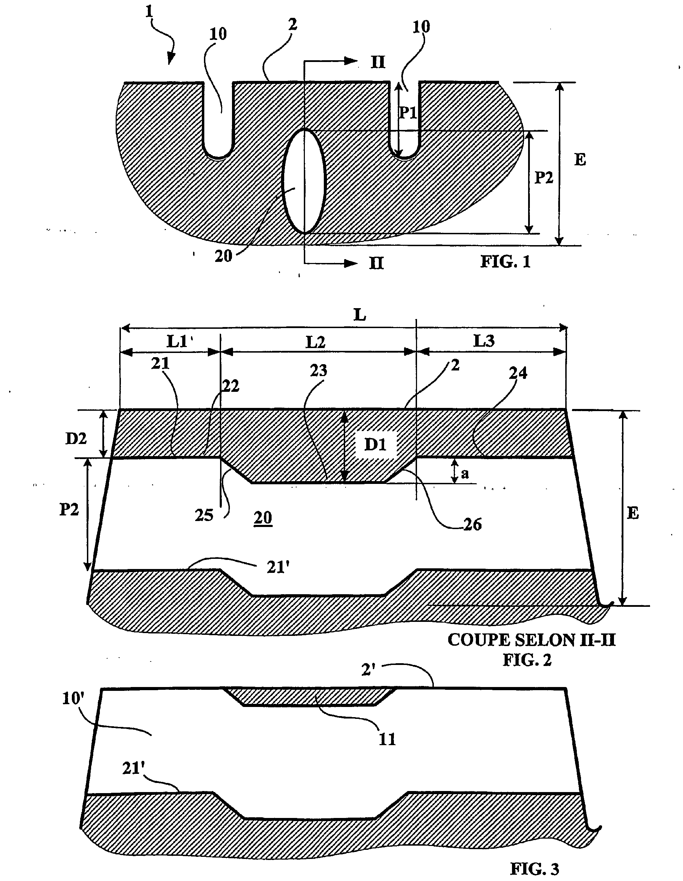

Sur la figure 1 est représentée une coupe partielle d'une bande de roulement 1 selon l'invention comportant une pluralité de premières rainures 10 délimitant des éléments de relief formant une sculpture à l'état neuf (c'est-à-dire non usée). Cette bande de roulement présente une surface de roulement à l'état neuf 2 destinée à venir en contact avec la chaussée pendant le roulage d'un pneumatique pourvu de cette bande de roulement.

Ces rainures 10 ont une profondeur P1 inférieure à l'épaisseur totale E de la bande de roulement (dans le cas présent, cette profondeur P1 est sensiblement égale à 50% de l'épaisseur E).

En outre, il est montré une section transversale d'une cavité 20 entièrement située sous la surface de roulement 2 à l'état neuf ; cette cavité présente dans le plan de coupe une section sensiblement elliptique dont le grand axe (sensiblement perpendiculaire à la surface de roulement 2 est de longueur P2 sensiblement égale à la profondeur P1. Cette cavité est destinée à former une nouvelle rainure après une usure partielle de la bande de roulement amenant la partie supérieure de ladite cavité sur la nouvelle surface de roulement. Dans le cas présent, la nouvelle rainure est formée avant même la disparition complète des premières rainures.

De façon à éviter la formation d'usure irrégulière sur les bords des éléments de gomme délimitant la nouvelle rainure formée sur la surface de roulement après usure partielle, la ligne génératrice supérieure 21 de la cavité 20 présente, vue en coupe selon la ligne II-II (c'est-à-dire dans un plan perpendiculaire au plan de la figure 1 et passant par les foyers de l'ellipse formant le contour de la section de la cavité), une géométrie qui se compose de trois parties sensiblement rectilignes 22, 23, 24 parallèles à la surface de roulement 2, les parties d'extrémité 22 et 24 étant reliées à la partie intermédiaire 23 par des parties inclinées 25, 26. Par ailleurs, la partie intermédiaire 23 est située à une distance D1 de la surface de roulement 2 qui est supérieure à la distance D2 séparant les parties d'extrémité 22 et 24 de la même surface 2. Dans le cas présenté, la différence des distances D2 et D1 est supérieure à 20% de la dimension maximale P2 de la cavité.

Lorsque l'usure de la bande de roulement est suffisamment avancée, les parties d'extrémité 22 et 24 de la génératrice supérieure 21 de la cavité 20 apparaissent sur la nouvelle surface de roulement et il y a formation d'une nouvelle rainure dont les parois en vis-à-vis sont reliées entre une profondeur D2 et une profondeur D1 par un pont de mélange de caoutchouc 11 (visible sur la figure 3). La présence d'au moins un pont 11 assure un niveau de rigidité suffisant pour éviter l'apparition d'une usure irrégulière sur les bords des éléments de surface de roulement formés tout en ayant un volume de rainure renouvelé par la formation d'une nouvelle rainure.

Les parties 22, 23, 24 formant la génératrice supérieure 21 ont des longueurs respectivement égales à L1, L2, L3, la longueur L2 étant supérieure à chacune des deux autres longueurs L1 et L3.

Sur l'exemple présenté avec les figures 1, 2 et 3, la cavité 20 a une génératrice inférieure 21' qui est sensiblement parallèle à la génératrice supérieure 21 de la même cavité de manière à assurer une section sensiblement constante de cavité quel que soit le plan de coupe.

Après une usure partielle suffisante (c'est-à-dire une usure au moins égale à D2), la bande de roulement adopte la configuration montrée à la figure 3 selon laquelle une nouvelle rainure 10' débouche sur la nouvelle surface de roulement 2', cette rainure 10' comportant dans sa partie supérieure, c'est-à-dire au voisinage de la surface de roulement 2', un pont de mélange de gomme 11 reliant les parois opposées délimitant ladite nouvelle rainure 10'. La présence de ce pont de gomme permet de lier mécaniquement les éléments de sculpture en vis-à-vis pour une usure correspondant à la hauteur a du pont 11.

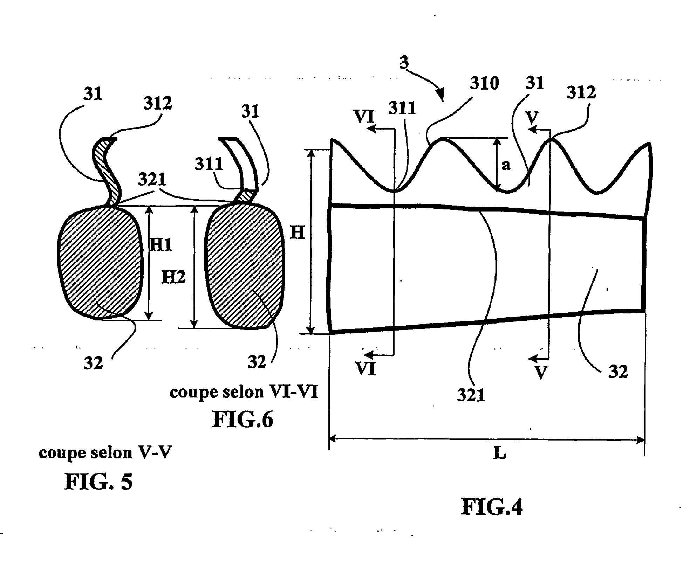

Dans une autre variante montrée avec le support des figures 4, 5, 6, une bande de roulement présente au moins une cavité sous la surface de roulement à l'état neuf pour former dans un premier temps une incision ne débouchant que partiellement sur la surface de roulement et dans un deuxième temps une rainure (l'incision s'élargissant progressivement pour former cette rainure).

La figure 4 montre plus précisément une pièce 3 d'un moule destinée à mouler la cavité dont il vient d'être fait mention. Cette pièce 3 comprend une partie supérieure 31 apte à mouler une incision de largeur inférieure à 2.5 mm et une partie inférieure 32 de largeur supérieure à 2.5 mm (ici au moins 4 fois la largeur de l'incision), lesdites deux parties étant solidaires l'une de l'autre. La génératrice supérieure 310 de la partie supérieure 31 a un tracé géométrique non uniforme de façon que les hauteurs des sections de ladite pièce de moule 3 en soient pas constantes et varient quand on se déplace selon la dimension de la longueur L de la pièce.

Dans le cas présenté, la génératrice supérieure 310 de la partie supérieure 31 a un tracé géométrique ondulé ; sur les figures 5 et 6 montrant des coupes transversales de la pièce (3) on distingue que les hauteurs de section sont respectivement H1 et H2 (la hauteur H2 étant plus grande que la hauteur H1). Lors de l'utilisation, cette pièce moule une cavité dont la partie supérieure (c'est-à-dire la plus proche de la surface de roulement) est une incision, cette incision ayant une génératrice supérieure qui n'est pas contenue en totalité dans une surface parallèle à ladite surface de roulement à l'état neuf.

De cette manière, lorsque après usure partielle d'une bande de roulement comportant une cavité moulée avec la pièce 3 décrite, certains des points de la génératrice supérieure de l'incision arrivent sur la surface de roulement (correspondant aux points 312 sur la pièce), la totalité du volume de la cavité (rainure et incision) est disponible pour l'évacuation de fluides (eau, air) bien qu'il existe des zones de liaison des parois en vis-à-vis de l'incision (correspondant aux zones en creux 311) qui vont limiter le risque d'apparition d'usure irrégulière.

Dans l'exemple décrit l'amplitude maximale, entre les points 312 de la génératrice supérieure 310 les plus près de la surface de roulement et les points 311 de la même génératrice les plus éloignés, est au moins égale à 20% de la hauteur totale maximale H de la pièce 3.

En pratique, la pièce 3 est montée sur un moule destiné au moulage d'une bande de roulement en caoutchouc comme cela est par exemple décrit dans la demande de brevet publiée sous le numéro WO98/54009, le démoulage d'une bande moulée se faisant en retirant dans un premier temps la pièce 3 avant d'extraire ladite bande du moule.

L'invention n'est pas limitée aux exemples décrits et représentés et diverses modifications peuvent y être apportées sans sortir de son cadre. En particulier le profil de raccordement entre la partie supérieure 31 et la partie inférieure 32 peut suivre une géométrie sensiblement identique à celle de la génératrice supérieure de la partie supérieure 31.

## Revendications

1. Bande de roulement (1) d'épaisseur totale E pour pneumatique, comprenant, à l'état neuf:
• une surface de roulement (2) destinée à être en contact avec la chaussée lors du roulage ;
• une pluralité de premières découpures (10) de profondeur inférieure à l'épaisseur (E) de la bande et délimitant des éléments de sculpture de hauteur inférieure à l'épaisseur totale de la bande ;
• une pluralité de cavités (20) entièrement situées sous la surface de roulement (2) à l'état neuf et s'étendant sur une longueur moyenne L, chacune de ces cavités (20) étant destinée à former au moins une nouvelle rainure ou incision après une usure partielle de la bande ;
• chaque cavité (20) limitée par la gomme de la bande de roulement présentant une génératrice supérieure (21) qui n'est pas en totalité contenue dans une surface parallèle à la surface de roulement (2) à l'état neuf, ladite génératrice supérieure étant définie par l'ensemble des points de chaque section limitant ladite cavité et situés au plus près de la surface de roulement à l'état neuf;
cette bande étant **caractérisée en ce que** pour chaque cavité (20), la génératrice supérieure (21) suit un profil ondulé et présentant une série de creux et de bosses, l'amplitude de ces creux et bosses étant au moins de 10% de la profondeur des nouvelles rainures ou incisions créées.

2. Bande de roulement (1) selon la revendication 1 **caractérisée en ce que** la distance, mesurée dans la direction de l'épaisseur de la bande, entre les points de sa génératrice supérieure les plus proches de la surface de roulement (2) à l'état neuf et les points les plus éloignés de la même surface est au moins égale à 20% de la profondeur totale (P2) de la rainure ou incision formée par ladite cavité (20).

3. Bande de roulement (1) selon la revendication 1 ou la revendication 2 **caractérisée en ce que** l'amplitude des creux et des bosses d'une même génératrice est au plus égale à 50% de la profondeur de la nouvelle rainure ou incision formée.

4. Bande de roulement (1) selon l'une des revendications 1 à 3 **caractérisée en ce que** pour chaque cavité (20) les points de sa génératrice supérieure (21) les plus éloignés de la surface de roulement (2) sont situés dans le deuxième tiers de la longueur L de ladite cavité (20).

5. Bande de roulement selon l'une des revendications 1 à 4 **caractérisée en ce que** au moins une cavité sous la surface de roulement à l'état neuf comprend une partie formée par une rainure prolongée vers ladite surface par une partie formée par une incision de largeur au plus égale à 2.5 mm, la génératrice supérieure de ladite incision n'étant pas entièrement contenue dans une surface parallèle à la surface de roulement à l'état neuf.

6. Bande de roulement selon la revendication 5 **caractérisée en ce que** l'incision prolongeant le cavité est délimitée par des parois de mélange de gomme comprenant des moyens de blocage mécanique permettant la diminution voire l'annulation des mouvements relatifs entre lesdites parois.

7. Bande de roulement selon l'une des revendications 1 à 6 **caractérisée en ce que** des points de la génératrice supérieure de chaque cavité sont à une distance de la surface de roulement du pneumatique neuf inférieure à celle des points les plus à l'intérieur des premières rainures formées sur la même surface de roulement.

8. Bande de roulement selon l'une des revendications 1 à 7 **caractérisée en ce que** chaque cavité comprend une génératrice inférieure qui n'est pas contenue dans une surface virtuelle parallèle à la surface de roulement du pneumatique neuf.

## Claims

1. Tread (1) of a total thickness E for tyres, comprising, when new:
• a running surface (2) intended to be in contact with the roadway during travel;
• a plurality of first cutouts (10) of a depth of less than the thickness (E) of the tread and defining tread pattern elements of a height less than the total thickness of the tread;
• a plurality of cavities (20) situated entirely beneath the running surface (2) when new and extending over an average length L, each of these cavities (20) being intended to form at least one new groove or incision after partial wear of the tread;
• each cavity (20) delimited by the rubber of the tread having an upper generatrix (21) which is not wholly contained in a surface parallel to the running surface (2) when new, said upper generatrix being defined by all the points of each section delimiting said cavity and situated closest to the running surface when new;
this tread being **characterised in that**, for each cavity (20), the upper generatrix (21) follows an undulating profile having a series of recesses and elevations, the amplitude of these recesses and elevations being at least 10% of the depth of the new grooves or incisions created.

2. Tread (1) according to claim 1, **characterised in that** the distance, measured in the direction of the thickness of the tread, between those points of its upper generatrix closest to the running surface (2) when new and the points furthest away from the same surface is at least equal to 20% of the total depth (P2) of the groove or incision formed by said cavity (20).

3. Tread (1) according to claim 1 or claim 2, **characterised in that** the amplitude of the recesses and elevations of one and the same generatrix is at most equal to 50% of the depth of the new groove or incision formed.

4. Tread (1) according to one of claims 1 to 3, **characterised in that**, for each cavity (20), the points of its upper generatrix (21) furthest from the running surface (2) are situated in the second third of the length L of said cavity (20).

5. Tread according to one of claims 1 to 4, **characterised in that** at least one cavity beneath the running surface when new comprises a part formed by a groove extended towards said surface by a part formed by an incision of a width at most equal to 2.5 mm, the upper generatrix of said incision not being entirely contained in a surface parallel to the running surface when new.

6. Tread according to claim 5, **characterised in that** the incision extending the cavity is defined by walls of rubber mix comprising mechanical locking means allowing the reduction or even elimination of relative movement between said walls.

7. Tread according to one of claims 1 to 6, **characterised in that** points of the upper generatrix of each cavity are at a distance from the running surface of the new tyre which is less than that of the points furthest to the inside of the first grooves formed on the same running surface.

8. Tread according to one of claims 1 to 7, **characterised in that** each cavity comprises a lower generatrix which is not contained in a virtual surface parallel to the running surface of the new tyre.

## Patentansprüche

1. Laufstreifen (1) für Luftreifen mit einer Gesamtdicke E, der im Neuzustand aufweist:
• eine Lauffläche (2), die während der Fahrt mit der Fahrbahn in Kontakt kommen soll;
• eine Vielzahl von ersten Einschnitten (10) mit einer Tiefe, die kleiner ist als die Dicke (E) des Laufstreifens, die die Profilelemente mit einer Höhe kleiner der Gesamtdicke des Laufstreifens begrenzen;
• eine Vielzahl von Hohlräumen (20), die sich im Neuzustand vollständig unter der Lauffläche (2) befinden und sich über eine mittlere Länge L erstrecken, wobei jeder Hohlraum (20) dazu vorgesehen ist, nach einer partiellen Abnutzung des Laufstreifens mindestens eine neue Rille oder einen neuen Feineinschnitt zu bilden;
• wobei jeder Hohlraum (20), der durch den Gummi des Laufstreifens begrenzt wird, eine obere Erzeugende (21) aufweist, die im Neuzustand nicht vollständig in einer Fläche enthalten ist, die parallel zur Lauffläche (2) verläuft, wobei die obere Erzeugende durch die Gesamtheit der Punkte jedes Abschnitts definiert wird, die den Hohlraum begrenzen und sich im Neuzustand am nächsten an der Lauffläche befinden, wobei der Laufstreifen **dadurch gekennzeichnet ist, dass** bei jedem Hohlraum (20) die obere Erzeugende (21) einem gewellten Profil folgt, das eine Reihe von Vertiefungen und Ausbuchtungen aufweist, wobei die Amplitude dieser Vertiefungen und Ausbuchtungen mindestens 10 % der Tiefe der gebildeten neuen Rillen oder Feineinschnitte beträgt.

2. Laufstreifen nach Anspruch 1, **dadurch gekennzeichnet, dass** der in Richtung der Dicke des Laufstreifens gemessene Abstand zwischen den Punkten der oberen Erzeugenden, die im Neuzustand am nächsten zur Lauffläche (2) liegen, und den Punkten, die am weitesten von der Lauffläche entfernt sind, mindestens 20 % der Gesamttiefe (P2) der durch den Hohlraum (20) gebildeten Rille oder des gebildeten Feineinschnitts beträgt.

3. Laufstreifen (1) nach Anspruch 1 oder nach Anspruch 2, **dadurch gekennzeichnet, dass** die Amplitude der Vertiefungen und Ausbuchtungen einer Erzeugenden höchstens 50 % der Tiefe der gebildeten neuen Rille oder des gebildeten neuen Feineinschnitts ausmacht.

4. Laufstreifen (1) nach einem der Ansprüche 1 bis 3, **dadurch gekennzeichnet, dass** bei jedem Hohlraum (20) die am weitesten von der Lauffläche (2) entfernt liegenden Punkte der oberen Erzeugenden (21) im zweiten Drittel der Länge L des Hohlraums (20) liegen.

5. Laufstreifen nach einem der Ansprüche 1 bis 4, **dadurch gekennzeichnet, dass** mindestens ein Hohlraum unter der Lauffläche im Neuzustand einen Bereich aufweist, der durch eine Rille gebildet wird, die sich in Richtung Oberfläche in einem Bereich fortsetzt, der von einem Feineinschnitt mit einer Breite von höchstens 2,5 mm gebildet wird, wobei die obere Erzeugende des Feineinschnittes im Neuzustand in einer parallel zur Lauffläche verlaufenden Fläche nicht vollständig enthalten ist.

6. Laufstreifen nach Anspruch 5, **dadurch gekennzeichnet, dass** der Feineinschnitt, der den Hohlraum fortsetzt, von Wänden aus Gummimischung begrenzt wird, die Einrichtungen zur mechanischen Blockierung aufweisen, mit denen die relativen Bewegungen der Wände vermindert oder sogar verhindert werden können.

7. Laufstreifen nach einem der Ansprüche 1 bis 6, **dadurch gekennzeichnet, dass** sich die Punkte der oberen Erzeugenden jedes Hohlraums sich in einem Abstand von der Lauffläche des neuen Luftreifens befinden, der kleiner ist als der Abstand der am weitesten innen liegenden Punkte der ersten Rillen, die an der gleichen Lauffläche gebildet sind.

8. Laufstreifen nach einem der Ansprüche 1 bis 7, **dadurch gekennzeichnet, dass** jeder Hohlraum eine untere Erzeugende aufweist, die in einer virtuellen, parallel zur Lauffläche des neuen Luftreifens verlaufenden Fläche nicht kontinuierlich ist.
